# EUROPEAN PATENT SPECIFICATION

(11) **EP 3 065 904 B1**
(45) Date of publication and mention of the grant of the patent: **17.05.2017**
(21) Application number: 14845033.1
(22) Date of filing: 06.11.2014
(51) Int. Cl.: B23C 3/35

(54) **CLAMP FOR A DUPLICATING MACHINE FOR BITTED AND DOUBLE-BITTED KEYS PROVIDED WITH A COLLAR ON THE SHANK**
KLEMME FÜR EINE DUPLIZIERMASCHINE FÜR EINGESCHNITTENE UND DOPPELTE EINGESCHNITTENE SCHLÜSSEL MIT EINER MANSCHETTE AUF DEM SCHAFT
PINCE DESTINÉE À UNE MACHINE À COPIER POUR DES CLÉS À PROFIL ET À DEUX PROFILS MUNIES D'UNE EMBASE SUR LA TIGE

(30) Priority: 06.11.2013 IT VE20130059
(43) Date of publication of application: 14.09.2016
(73) Proprietor: SILCA S.p.A., 31029 Vittorio Veneto (IT)
(72) Inventor: DA RODDA, Oreste, I-31020 Revine Lago (IT)
(74) Representative: Piovesana, Paolo
(86) International application number: PCT/IB2014/002391
(87) International publication number: WO 2015/068025

(56) References cited:
- EP-A1- 0 709 154
- DE-U1- 7 736 199
- FR-A1- 2 469 240
- GB-A- 932 200
- GB-A- 2 419 310
- GB-A- 191 101 636
- TW-U- M 435 306
- US-A- 3 286 596
- US-A- 3 923 194

## Description

The present invention relates to a clamp for a duplicating machine for bitted and double-bitted keys provided with a collar on the shank.

Clamps are known for electromechanical and electronic duplicating machines for bitted and double-bitted keys.

To correctly carry out the duplication operation, the clamp must ensure precise key positioning, in the sense that in electromechanical duplicating machines it must ensure that the original key to be duplicated and the blank key to be bitted occupy the same position on the respective clamps, while in electronic duplicating machines it must ensure that the blank key to be bitted is precisely positioned on the clamp in accordance with the reference data memorized in the duplicating machine.

This precise positioning is achieved using as the locator element the tip of the key shank, which is made to rest against a fixed part of the respective clamp, or is achieved by using the front transverse edge of the bitted or double-bitted portion, i.e. that transverse edge of this portion close to the tip of the shank. Because of the fact that during use the key rests with its tip or with the front edge of its bitted or double-bitted portion against a corresponding locator element in the lock, it is apparent that the known art of positioning a key on the respective clamp of the duplicating machine ensures a substantial reproduction fidelity of the original key in the key copy.

However, the market also comprises bitted and double-bitted keys provided with a collar on the shank, constituting the locator element for the key when inserted into the lock. For this type of key the positioning locator on the respective duplicating machine clamp does not ensure reproduction fidelity, as it uses a locator element in the clamp which is different from the locator element in the lock, which can cause incorrect key duplication and inability of the key copy to operate the lock normally operable by the original key.

GB 1636 A.D. 1911 describes a clamp according to the preamble of independent claim 1 comprising three parts hinged about a single axis and provided with a locator element for the key collar. In particular, this locator element comprises a threaded bar and a nut with two grooves against which the key collar abuts. The locator element is adjusted by screwing or unscrewing the bar about the nut. This type of clamp, besides being fairly complicated constructionally, does not allow the locator element to be precisely, easily and quickly adjusted.

DE7736199 describes a clamp with jaws for clamping various types of key and is provided with a stop which serves to prevent key rotation. Moreover, in this clamp, said stop does not have an adjustable position, so is not suitable for use in duplicating with a collar given that, in these, the position of the collar along the key shank varies according to the type of bitted or double-bitted key.

An object of the invention is to provide a clamp for a duplicating machine for bitted and double-bitted keys provided with a collar, able to ensure correct implementation of the duplication work.

Another object of the invention is to provide a clamp able to operate on keys provided with a collar, independently, within certain limits, of the position of the collar relative to the bitted portion.

Another object of the invention is to provide a clamp in which the positioning of the locator element for the key collar can be adjusted precisely, easily and quickly.

These and other objects which will apparent from the ensuing description are attained, according to the invention, by a clamp for a duplicating machine for bitted and double-bitted keys provided with a collar on the shank, as defined in claim 1, and by a duplicating machine as described in claim 8.

A preferred embodiment of the present invention is further clarified hereinafter with reference to the accompanying drawings, in which:

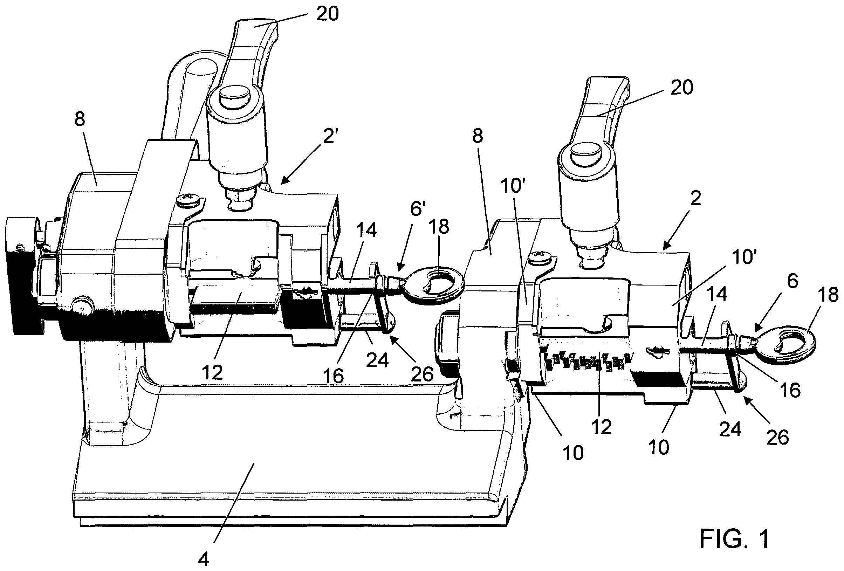

Figure 1 is a perspective view of a pair of clamps according to the invention, mounted on a single structure applicable to an electromechanical duplicating machine,

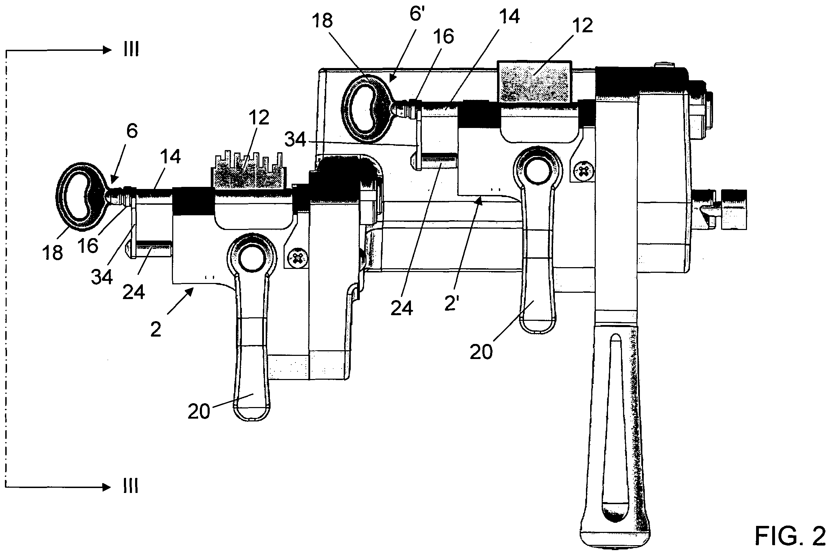

Figure 2 shows the same clamps in plan view,

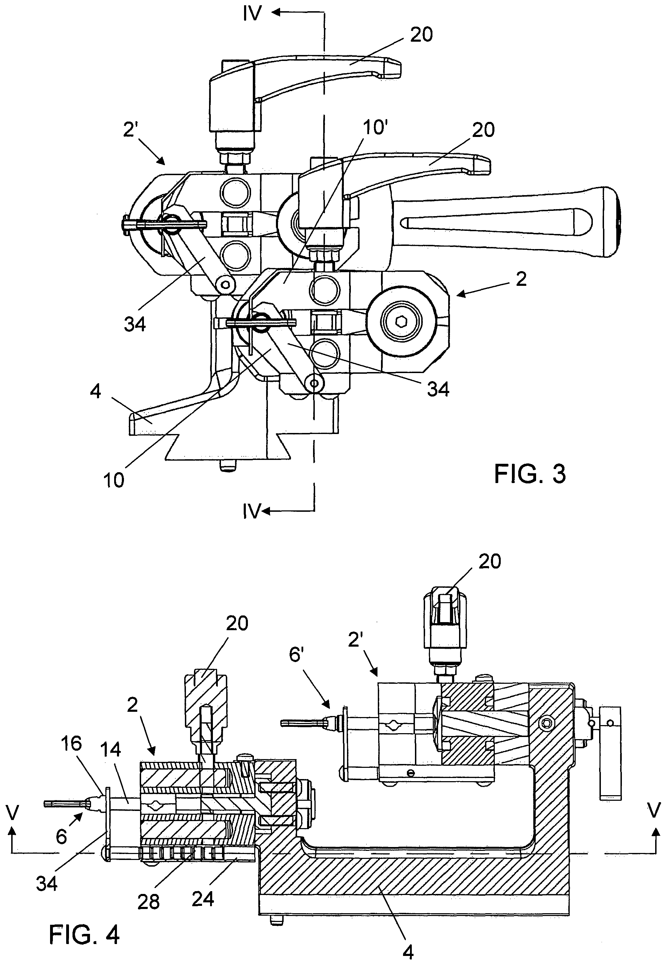

Figure 3 is a lateral view thereof in the direction III-III of Figure 2,
Figure 4 is a longitudinal section therethrough on the line IV-IV of Figure 3,

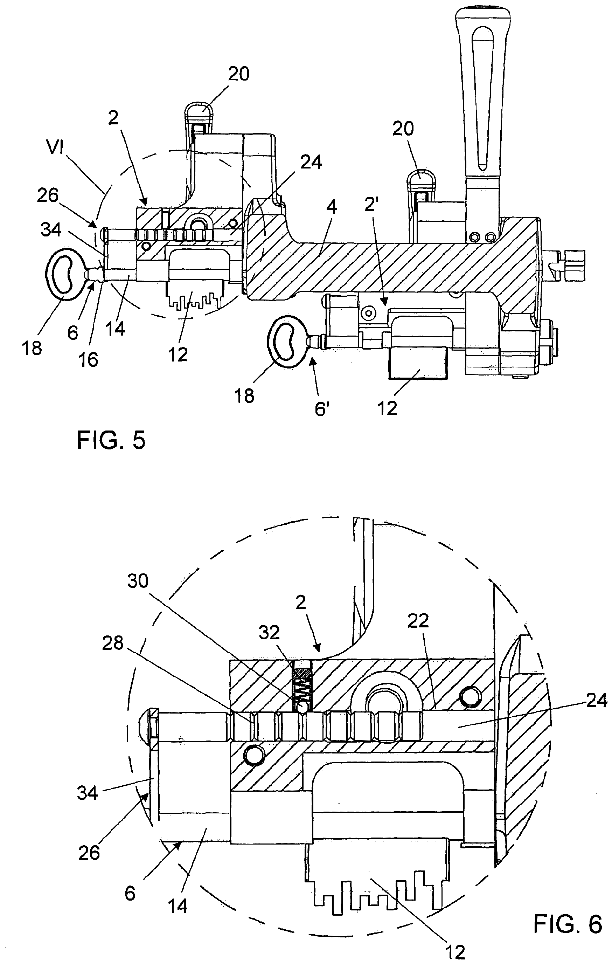

Figure 5 is a longitudinal section therethrough on the line V-V of Figure 4, and
Figure 6 shows the enlarged detail enclosed by the circular line VI of Figure 5.

As can be seen from the figures, these show a pair of clamps, indicated overall by the reference numerals 2, 2', mounted on a single structure 4 applicable to the carriage (not shown) of an electromechanical duplicating machine.

The clamp 2 for the original key 6 is described hereinafter, however the same description is also valid for the clamp 2' for the blank key 6'.

The clamp 2 comprises a portion 8 for fixing to the structure 4 and with which a pair of lower jaws 10 is associated, hinged to a pair of upper jaws 10' to securely clamp the key 6 therebetween. Both the lower jaws 10 and the upper jaws 10' are self-centring and mutually movable, and in particular are provided with a V-shaped groove able to clamp the shank 14 of a bitted key at both ends of its bitted portion 12 which is to be reproduced identically in the bit portion of the blank key 2'.

Both the original key 6 and the blank key 6' comprise on the shank 14 a collar 16 situated in proximity to the key head 18, at a prefixed distance from the key bitted portion 12. The position of the collar 16 can vary along the shank 14 according to the type of bitted or double-bitted key.

In the rest condition the two pairs of lower jaws 10 and upper jaws 10' are maintained slightly spaced apart by a spring (not shown), whereas in their working position they are urged by a knob 20 to adhere together to clamp the interposed shank 14 of the key 6.

A preferably cylindrical seat 22 having its axis parallel to the key shank 14 is provided in that portion 8 of the clamp 2 rigid with the structure 4 and with the lower jaws 10, and is intended to slidingly house the stem 24 of a locator member indicated overall by 26.

The stem 24 is provided with a plurality of preferably circumferential grooves (or notches) 28 spaced along the stem axis and intended to interact with an elastic engagement element which is urged against the lateral surface of the stem 24 to snap-engage the facing groove 28, which differs depending on the axial position of the stem 24 along its seat 22. Preferably, said elastic engagement element comprises a ball 30 urged axially by a spring 32. In particular, this type of snap-engagement of the elastic element within the grooves 28 of the stem 24 enables the locator member 26 to be moved between a plurality of working positions.

Advantageously, the stem 24 is provided with a series of marks to identify the individual grooves 28. In particular, at each groove 28 a mark (numerals and/or letters and/or other symbols) is provided which identifies it uniquely, clearly and immediately.

At the outer end of the stem 24 a locator bar 34 is applied positioned perpendicular to the axis of the stem 24. Preferably, the locator bar 34 presents an engagement notch which at least partly embraces the shank 14 of the key 6 clamped between the jaws 10, 10' of the clamp 2.

As already stated, that now described relative to the clamp 2 is also valid for the clamp 2', which is constructionally identical to the clamp 2 and has its components indicated by the same reference numerals.

The clamp according to the invention operates in the following manner: the already bitted original key 6 is positioned in the clamp 2 and the blank key 6' to be bitted is positioned in the clamp 2'. Depending on the position of the collar 16 and of the key 6, 6' with respect to the portion 12 to be bitted, the locator member 26 is extracted from each clamp by simply axially sliding its stem 24 within its cylindrical seat 22. In particular, the collar member 26 is extracted to an extent approximately corresponding to the position of the collar 16, such that the portion 12 to be bitted falls into the operating zone of a feeler and a milling cutter respectively, with which the duplicating machine is provided.

The extraction of the stem 24 from its cylindrical seat 22 always terminates in a position corresponding to a groove 28 thereof in order to securely lock said stem in the position reached following the extraction; in particularly, this is ensured by the snap-engagement of the elastic engagement element 30 into the facing groove 28 of the stem 24.

The presence of the grooves 28 and in particular of the marks associated therewith on the stem 24 enables the user to accurately know by how much the stem 24 has been extracted from its seat 22, and hence the distance of the locator bar 34 from the clamp jaws.

The key 6, 6' is then clamped in the respective clamp 2, 2', after it has been made to adhere by its collar 16 to the corresponding locator bar 34.

At this point, the duplicating machine is operated in traditional manner to cut the blank key 6' to correspond to the original key 6. However, the method of positioning each key 6, 6' in the respective clamp 2, 2' ensures rigorous respect, in the key copy, for the distance of the bitted zone 12 from the collar 16, which when in use constitutes the reference part for the key when inserted into the lock.

Advantageously, in one embodiment not shown, an element is provided which rigidly connects the stem 24 of the clamp 2, which clamps the original key 6, to the stem 24 of the clamp 2', which clamps the blank key 6'. Preferably, this element consists of a bar interposed between corresponding positions defined on the stems 24 of the two clamps 2, 2'. In particular, the fact that the stems 24 of the clamps 2, 2' are mutually rigid enables and ensures a precise correspondence between the movement of the two stems 24, hence facilitating adjustment of the position of the respective locator members between the two clamps 2, 2'.

From the aforegoing it is clear that the clamp according to the invention enables rigorous precision to be achieved in the duplication of bitted and double-bitted keys with a collar, independently of the fact of whether this clamp is applied to an electromechanical duplicating machine with movable clamps and fixed tools (feeler and milling cutter), or to an electromechanical duplicating machine with fixed clamps and movable tools, or to an electronic machine with a single clamp movable relative to the fixed milling cutter or with a milling cutter movable relative to the fixed clamp.

The fact that the locator member for the collar is movable by simply sliding its stem within its containing seat and is then locked by the snap-engagement of an elastic element within one of the grooves on said stem, renders the adjustment of the position of this member considerably easier, quicker and more precise compared with that achieved by rotating a threaded screw.

The advantages relative to the ease, speed and precision in adjusting the position of the collar locator element are even greater if considering that duplicating machines have two clamps, with the need to ensure the same positioning of the original key to be duplicated and of the blank key to be bitted on the respective clamps.

In this respect, in duplicating machines, the position of the original key on the first clamp (that facing the feeler) must correspond exactly to the position of the blank key on the second clamp (that facing the milling cutter), to achieve which the user must be able to identify these two positions in order to be able to compare them for the purpose of checking that they are equal.

In the case of adjustment by a threaded screw, the user is unable visually either to identify or compare with accuracy the position of each key on the corresponding clamp. In contrast, the fact that in the present invention the locator element is slidable and presents snap-engagable grooves (or notches), enables a reference part for the key to be identified immediately with greater precision in each of the two clamps, and to compare them easily and immediately, and even more so if the individual notches are marked with a sign which renders their identification immediate. Moreover, following this comparison, if the reference parts of the two clamps do not correspond, the stem of the locator element of one of the two clamps has merely to be slid until correspondence is established.

## Claims

1. A clamp (2, 2') for a duplicating machine for bitted and double-bitted keys provided with a collar (16) on the shank (14), with jaws (10, 10') for clamping said key (6, 6'), said clamp comprising a locator element (26) of adjustable position such that, when a key (6, 6') is clamped between said jaws (10, 10'), the collar (16) of said key (6, 6') rests against said locator element (26), **characterised in that** said locator element (26) comprises a portion (24) which can be withdrawn from said clamp in a manner parallel to the axis of the shank (14) of the key (6, 6') when clamped between the jaws (10, 10') of said clamp, and a locator bar (34) extending in a direction substantially perpendicular to said withdrawable portion (24) and being able to interact with said collar (16), and **in that** said withdrawable portion (24) of the locator element (26) is provided with a plurality of notches (28) spaced apart in the withdrawal direction and selectively snap-engagable by an elastic engagement element (30, 32) with which said clamp (2, 2') is provided.

2. A clamp as claimed in claim 1, **characterised in that** said withdrawable portion (24) of the locator element (26) comprises a series of marks, each of which is defined at a notch (28) in order to enable this latter to be uniquely identified.

3. A clamp as claimed in one or more of the preceding claims, **characterised in that** said engagement element comprises a ball (30) associated with a spring (32), which presses it against said withdrawable portion (24).

4. A clamp as claimed in one or more of the preceding claims, **characterised in that** said locator bar (34) is provided with a notch which at least partly embraces the shank portion (14) of the key (6, 6') in proximity to said collar (16).

5. A clamp as claimed in one or more of the preceding claims, **characterised in that** the withdrawable portion (24) of the locator element (26) is of cylindrical shape, the notches (28) provided therein extending mutually parallel circumferentially thereon.

6. A clamp as claimed in one or more of the preceding claims, **characterised in that** each jaw (10, 10') is essentially fork-shaped with the prongs spaced apart by an extent suitable for clamping the shank (14) of the key (6, 6') upstream and downstream of that portion (12) thereof which is to be bitted.

7. A clamp as claimed in one or more of the preceding claims, **characterised by** a pair of lower jaws (10) and a pair of upper jaws (10'), both said pairs of jaws (10, 10') being self-centring and mutually movable.

8. A duplicating machine for bitted and double-bitted keys provided with a collar (16) on the shank (14), **characterised by** comprising a single structure (4) in which the following are mounted:
- a first clamp (2) in accordance with one or more of the preceding claims, positioned within the operative zone of a feeler and intended to clamp the original key (6) to be duplicated, and
- a second clamp (2') in accordance with one or more of the preceding claims, positioned within the operative zone of a milling cutter and intended to clamp the blank key (6').

9. A duplicating machine as claimed in claim 8, **characterised in that** said first clamp (2) is movable relative to said feeler, which is fixed, and **in that** said second clamp (2') is movable relative to said milling cutter, which is fixed.

10. A duplicating machine as claimed in one or more of claims from 8 to 9, **characterised in that** said first clamp (2) is fixed relative to said feeler, which is movable, and **in that** said second clamp (2') is fixed relative to said milling cutter, which is movable.

11. A duplicating machine as claimed in one or more of claims from 8 to 10, **characterised in that** the stem (24) of said first clamp (2) is connected rigidly to the stem (24) of said second clamp (2').

## Patentansprüche

1. Klemme (2, 2') für eine Dupliziermaschine für eingeschnittene und doppelt eingeschnittene Schlüssel, die mit einer Manschette (16) auf dem Schaft (14) versehen sind, mit Backen (10, 10') zum Einklemmen des Schlüssels (6, 6'), wobei die Klemme ein Positionierelement (26) mit verstellbarer Position aufweist, sodass, wenn ein Schlüssel (6, 6') zwischen die Backen (10, 10') geklemmt ist, die Manschette (16) des Schlüssels (6, 6') an dem Positionierelement (26) anliegt, **dadurch gekennzeichnet, dass** das Positionierelement (26) einen Abschnitt (24), der parallel zur Achse des Schafts (14) des Schlüssels (6, 6') von der Klemme herausgezogen werden kann, wenn der Schlüssel zwischen die Backen (10, 10') geklemmt ist, sowie einen Positionierriegel (34), der in einer im Wesentlichen senkrechten Richtung zu dem zurückziehbaren Abschnitt (24) verläuft und mit der Manschette (16) in Wechselwirkung treten kann, aufweist, und dadurch, dass der zurückziehbare Abschnitt (24) des Positionierelements (26) mit mehreren Einkerbungen (28) versehen ist, die in der Richtung des Zurückziehens beabstandet sind und in die ein elastisches Einschnappelement (30, 32), mit dem die Klemme (2, 2') versehen ist, selektiv einschnappen kann.

2. Klemme nach Anspruch 1, **dadurch gekennzeichnet, dass** der zurückziehbare Abschnitt (24) des Positionierelements (26) eine Reihe von Markierungen aufweist, von denen jede an einer Einkerbung (28) definiert ist, damit diese eindeutig erkennbar ist.

3. Klemme nach mindestens einem der vorhergehenden Ansprüche, **dadurch gekennzeichnet, dass** das Einschnappelement eine Kugel (30) aufweist, die mit einer Feder (32) verbunden ist, welche sie gegen den zurückziehbaren Abschnitt (24) drückt.

4. Klemme nach mindestens einem der vorhergehenden Ansprüche, **dadurch gekennzeichnet, dass** der Positionierriegel (34) mit einer Einkerbung versehen ist, die den Schaftabschnitt (14) des Schlüssels (6, 6') in der Nähe der Manschette (16) mindestens teilweise umschließt.

5. Klemme nach mindestens einem der vorhergehenden Ansprüche, **dadurch gekennzeichnet, dass** der zurückziehbare Abschnitt (24) des Positionierelements (26) von zylindrischer Form ist, wobei die darin bereitgestellten Einkerbungen (28) ringsum darauf parallel zueinander verlaufen.

6. Klemme nach mindestens einem der vorhergehenden Ansprüche, **dadurch gekennzeichnet, dass** jede Backe (10, 10') im Wesentlichen gabelförmig ist, wobei die Zinken einen Abstand aufweisen, der geeignet ist, um den Schaft (14) des Schlüssels (6, 6') oberhalb und unterhalb jenes Abschnitts (12) davon, der einzuschneiden ist, einzuklemmen.

7. Klemme nach mindestens einem der vorhergehenden Ansprüche, **gekennzeichnet durch** ein Paar untere Backen (10) und ein Paar obere Backen (10'), wobei beide Backenpaare (10, 10') selbstzentrierend und wechselseitig bewegbar sind.

8. Dupliziermaschine für eingeschnittene und doppelt eingeschnittene Schlüssel, die mit einer Manschette (16) auf dem Schaft (14) versehen sind, **dadurch gekennzeichnet, dass** sie eine einzelne Struktur (4) aufweist, in der die folgenden Elemente befestigt sind:
- eine erste Klemme (2) nach mindestens einem der vorhergehenden Ansprüche, welche innerhalb des Funktionsbereichs eines TasterTasters positioniert ist und dafür bestimmt ist, den zu duplizierenden Originalschlüssel (6) einzuklemmen, und
- eine zweite Klemme (2') nach mindestens einem der vorhergehenden Ansprüche, die innerhalb des Funktionsbereichs eines Fräsers positioniert ist und dafür bestimmt ist, den Schlüsselrohling (6') einzuklemmen.

9. Dupliziermaschine nach Anspruch 8, **dadurch gekennzeichnet, dass** die erste Klemme (2) relativ zu dem Taster, der fixiert ist, bewegbar ist, und dass die zweite Klemme (2') relativ zu dem Fräser, der fixiert ist, bewegbar ist.

10. Dupliziermaschine nach mindestens einem der Ansprüche 8 bis 9, **dadurch gekennzeichnet, dass** die erste Klemme (2) relativ zu dem Taster, der bewegbar ist, fixiert ist und dass die zweite Klemme (2') relativ zu dem Fräser, der bewegbar ist, fixiert ist.

11. Dupliziermaschine nach mindestens einem der Ansprüche 8 bis 10, **dadurch gekennzeichnet, dass** der Stiel (24) der ersten Klemme (2) starr mit dem Stiel (24) der zweiten Klemme (2') verbunden ist.

## Revendications

1. Pince (2, 2') destinée à une machine à copier pour des clés à profil et à deux profils munies d'une embase (16) sur la tige (14), avec des mâchoires (10, 10') pour serrer ladite clé (6, 6'), ladite pince comprenant un élément de positionnement (26) pour une position réglable de sorte que, lorsqu'une clé (6, 6') est serrée entre lesdites mâchoires (10, 10'), l'embase (16) de ladite clé (6, 6') repose contre ledit élément de positionnement (26), **caractérisée en ce que** ledit élément de positionnement (26) comprend une partie (24) qui peut se retirer de ladite mâchoire de manière parallèle à l'axe de la tige (14) de la clé (6, 6') lorsqu'elle est serrée entre les mâchoires (10, 10') de ladite pince, et une barre de positionnement (34) s'étendant dans une direction substantiellement perpendiculaire à ladite partie (24) qui peut se retirer et étant capable d'interagir avec ladite embase (16), et **en ce que** ladite partie (24) qui peut se retirer de l'élément de positionnement (26) est munie d'une pluralité d'encoches (28) espacées séparées dans la direction du retrait et s'encliquetant de manière sélective par un élément d'encliquetage élastique (30, 32) dont est munie ladite pince (2, 2').

2. Pince selon la revendication 1, **caractérisée en ce que** ladite partie (24) qui peut se retirer de l'élément de positionnement (26) comprend une série de marques, dont chacune est définie sous la forme d'une encoche (28) afin de permettre à cette dernière d'être identifiée de manière unique.

3. Pince selon l'une ou plusieurs des revendications précédentes, **caractérisée en ce que** ledit élément d'encliquetage comprend une bille (30) associée à un ressort (32) qui la presse contre ladite partie (24) qui peut se retirer.

4. Pince selon l'une ou plusieurs des revendications précédentes, **caractérisée en ce que** ladite barre de positionnement (34) est munie d'une encoche qui enlace au moins partiellement la partie de tige (14) de la clé (6, 6') à proximité de ladite embase (16).

5. Pince selon l'une ou plusieurs des revendications précédentes, **caractérisée en ce que** la partie (24) qui peut se retirer de l'élément de positionnement (26) est de forme cylindrique, les encoches (28) y étant installées s'étendant mutuellement de manière parallèle sur la circonférence de celui-ci.

6. Pince selon l'une ou plusieurs des revendications précédentes, **caractérisée en ce que** chaque mâchoire (10, 10') est essentiellement en forme de fourche avec les espaces entre les dents ayant une étendue appropriée pour serrer la tige (14) de la clé (6, 6') en amont et en aval de sa portion (12) en question qui doit être profilée.

7. Pince selon l'une ou plusieurs des revendications précédentes, **caractérisée par** une paire de mâchoires inférieures (10) et une paire de mâchoires supérieures (10'), les deux paires de mâchoires (10, 10') pouvant s'auto-centrer et pouvant se déplacer mutuellement.

8. Machine à copier pour des clés à profil et à deux profils munies d'une embase (16) sur la tige (14), **caractérisée par** le fait de comprendre une structure unique (4) dans laquelle les éléments suivants sont montés :
- une première pince (2) selon l'une ou plusieurs des revendications précédentes, positionnée à l'intérieur de la zone d'opération d'un palpeur et prévue pour serrer la clé d'origine (6) devant être dupliquée, et
- une seconde pince (2') selon l'une ou plusieurs des revendications précédentes, positionnée à l'intérieur de la zone d'opération d'une fraise et prévue pour serrer la clé à blanc (6').

9. Machine à copier selon la revendication 8, **caractérisée en ce que** ladite première pince (2) peut se déplacer par rapport audit palpeur qui est fixe et **en ce que** ladite seconde pince (2') peut se déplacer par rapport à ladite fraise qui est fixe.

10. Machine à copier selon l'une ou plusieurs des revendications 8 à 9, **caractérisée en ce que** ladite première pince (2) est fixe par rapport audit calibre qui peut se déplacer et **en ce que** ladite seconde pince (2') est fixe par rapport à ladite fraise qui peut se déplacer.

11. Machine à copier selon l'une ou plusieurs des revendications 8 à 10, **caractérisée en ce que** le tronc (24) de ladite première pince (2) est relié de manière rigide au tronc (24) de ladite seconde pince (2').
